# EUROPÄISCHE PATENTSCHRIFT

(11) **EP 2 510 067 B1**
(45) Veröffentlichungstag und Bekanntmachung des Hinweises auf die Patenterteilung: **02.10.2013**
(21) Anmeldenummer: 10785442.4
(22) Anmeldetag: 06.12.2010
(51) Int. Cl.: C09J 133/08

(54) **HAFTKLEBSTOFF FÜR PVC-FOLIEN**
PRESSURE-SENSITIVE ADHESIVE FOR PVC FILMS
ADHÉSIF DE CONTACT POUR FILMS PVC

(30) Priorität: 09.12.2009 EP 09178445
(43) Veröffentlichungstag der Anmeldung: 17.10.2012
(73) Patentinhaber: BASF SE, 67056 Ludwigshafen (DE)
(72) Erfinder: CIMPEANU, Carmen-Elena, 67059 Ludwigshafen (DE); BEYERS, Cornelis Petrus, 67122 Altrip (DE); DRAGON, Andree, 67346 Speyer (DE)
(86) Internationale Anmeldenummer: PCT/EP2010/068945
(87) Internationale Veröffentlichungsnummer: WO 2011/069950

(56) Entgegenhaltungen:
- EP-A2- 0 219 796
- DE-A1- 19 929 561
- US-A1- 2003 113 460

## Beschreibung

Die Erfindung betrifft einen Klebstoff, insbesondere für Anwendungen auf Trägermaterialien aus Weich-PVC, enthaltend ein durch radikalische Polymerisation von ethylenisch ungesättigten Verbindungen erhältliches Polymer, welches aufgebaut ist aus bestimmten Mengen an weichen Acrylatmonomeren mit einer Glasübergangstemperatur von kleiner 0 °C, ethylenisch ungesättigten Nitrilen, harten Acrylatmonomeren mit einer Glasübergangstemperatur von mindestens 60 °C, ethylenisch ungesättigten Säuremonomeren und Monomeren mit mindestens zwei nicht-konjugierten, polymerisierbaren Vinylgruppen, wobei die Polymerisation durch Stufenpolymerisation erfolgt und mindestens ein Teil der weichen Acrylatmonomere in einer ersten Polymerisationsstufe polymerisiert werden und mindestens ein Teil der harten Acrylatmonomere in einer zweiten oder späteren Polymerisationsstufe polymerisiert werden. Beschrieben werden auch Verwendungen des Klebstoffs zum Verbinden von Substraten aus Weich-PVC sowie selbstklebende Artikel mit einer PVC-Folie als Trägermaterial und einer Beschichtung mit dem erfindungsgemäßen Klebstoff.

Für Außen- und Innenanwendungen, insbesondere für sogenannte Graphic Arts Anwendungen, werden häufig selbstklebende Etiketten und Bänder sowie bedruckte Folien mit Weich-PVC als Trägermaterial eingesetzt. Weich-PVC-Folien enthalten erhebliche Mengen an niedermolekularen Weichmachern auf Phthalatbasis oder polymere Weichmacher. Ein Problem, das durch die Verwendung dieser Weichmacher auftritt, ist, dass der Weichmacher aus der Folie in den Haftklebstoff migrieren kann. Hierdurch werden die anwendungstechnischen Klebeeigenschaften beeinträchtigt. Sowohl die Kohäsion des Klebstoffs, als auch die Adhäsion des Klebstoffs zur Oberfläche, auf die das Etikett bzw. die Folie geklebt wird, werden durch die Migration des Weichmachers in den Klebstoff im Allgemeinen deutlich vermindert. Dieses Problem tritt verstärkt dann auf, wenn vorbeschichtete, selbstklebende Weich-PVC-Folien vor der Anwendung längere Zeit, insbesondere auch bei höheren Temperaturen gelagert werden.

Im Außen- und Innenbereich sind die selbstklebenden Artikel auch dem Einfluss von Feuchtigkeit ausgesetzt. Die Einwirkung von Wasser auf den Klebstofffilm führt zu einer unerwünschten weißen Trübung, welche Weißanlaufen genannt wird.

Bei selbstklebenden Artikeln mit Polymerfolien, insbesondere Weich-PVC als Trägermaterial, kommt es häufig zu einem Schrumpfen der Folie bei der späteren Verwendung. Ein Schrumpfen ist insbesondere zu beobachten, wenn die selbstklebenden Artikel bei der Verwendung erhöhten Temperaturen ausgesetzt sind. Gewünscht sind daher Klebstoffe, die selbstklebende Artikel mit einem verbesserten Schrumpfverhalten ergeben.

In der WO 2005/100501 werden Haftklebstoffe für PVC-Folien beschrieben. Die Haftklebstoffe enthalten ein durch radikalische Polymerisation von ethylenisch ungesättigten Verbindungen erhältliches Polymer, welches aufgebaut ist aus mindestens 60 Gew.% Hauptmonomeren, ausgewählt aus u.a. C1- bis C20 Alkyl(meth)acrylaten sowie zu mehr als 1 Gew.% aus Monomeren mit mindestens zwei nicht-konjugierten, polymerisierbaren Vinylgruppen. Klebstoffe zur Herstellung von selbstklebenden Artikeln mit Weich-PVC als Trägermaterial werden auch in EP 1378527, EP 1520898, EP 454426, EP 978551 und WO 93/14161 beschrieben.

Die weitere Optimierung der drei Qualitätsanforderungen hinsichtlich Lagerstabilität, Weißanlaufverhalten und Schrumpfverhalten ist nicht trivial, da eine Verbesserung in einem Kriterium häufig mit Beeinträchtigungen bei mindestens einer der anderen Kriterien verbunden ist.

Aufgabe der vorliegenden Erfindung waren daher Klebstoffe für selbstklebende Artikel mit möglichst geringer Schrumpfung und möglichst guter Wasserbeständigkeit (Weißanlaufen) und möglichst guter Lagerfähigkeit, insbesondere bei höheren Temperaturen. Die Klebstoffe sollen weiterhin eine gute Adhäsion und Kohäsion haben, sowie gut verarbeitbar sein.

Demgemäß wurden die unten näher definierten Klebstoffe und ihre Verwendung gefunden. Gegenstand der Erfindung ist ein Klebstoff, enthaltend ein durch radikalische Polymerisation von ethylenisch ungesättigten Verbindungen erhältliches Polymer, welches aufgebaut ist aus
(a) mindestens 50 Gew. % mindestens eines weichen Acrylatmonomers, ausgewählt aus Alkylacrylaten, welche, wenn sie als Homopolymer polymerisiert sind, eine Glasübergangstemperatur von kleiner 0 °C aufweisen,
(b) mindestens 1 Gew.% mindestens eines ethylenisch ungesättigten Nitrils,
(c) mindestens 1 Gew.% mindestens eines harten Acrylatmonomers, ausgewählt aus Alkylacrylaten und Alkylmethacrylaten, welche jeweils, wenn sie als Homopolymer polymerisiert sind, eine Glasübergangstemperatur von mindestens 60 °C aufweisen,
(d) mindestens 0,1 Gew.% mindestens eines ethylenisch ungesättigten Säuremonomers,
(e) mindestens 0,01 Gew.% mindestens eines Monomeren mit mindestens zwei nicht-konjugierten, polymerisierbaren Vinylgruppen, und
(f) optional aus weiteren, von den Monomeren (a) bis (e) verschiedenen Monomeren, wobei die Polymerisation durch Stufenpolymerisation erfolgt, wobei mindestens ein Teil der weichen Acrylatmonomere (a) in einer ersten Polymerisationsstufe polymerisiert werden und mindestens ein Teil der harten Acrylatmonomere (c) in einer zweiten oder späteren Polymerisationsstufe polymerisiert werden. Die Glasübergangstemperatur lässt sich bestimmen durch Differential Scanning Calorimetrie (ASTM D 3418-08, sog. "midpoint temperature").

Der erfindungsgemäße Klebstoff enthält das oben definierte Polymer. Das Polymer ist durch radikalische Polymerisation von ethylenisch ungesättigten Verbindungen (Monomeren) erhältlich. Das Polymer besteht zu mindestens 50 Gew. %, bevorzugt zu mindestens 55 Gew.-%, besonders bevorzugt zu 55 bis 90 Gew.-% aus mindestens einem weichen Acrylatmonomer, ausgewählt aus Alkylacrylaten, welche, wenn sie als Homopolymer polymerisiert sind, eine Glasübergangstemperatur von kleiner 0 °C, bevorzugt kleiner -10°C oder kleiner -20°C,besonders bevorzugt kleiner -30°C aufweisen.

Weiche Acrylatmonomere (a) sind z.B. Acrylsäurealkylester mit einem C₂-C₁₀-Alkylrest. Zu nennen sind z.B. Ethylacrylat, n-Propylacrylat, Isobutylacrylat, sec-Butylacrylat, tert.-Butylacrylat, n-Butylacrylat, n-Hexylacrylat oder 2-Ethylhexylacrylat. Besonders bevorzugt sind n-Butylacrylat und 2-Ethylhexylacrylat und deren Gemisch.

Ethylenisch ungesättigte Nitrile (b) werden zu mindestens 1 Gew.%, vorzugsweise von 1 bis 15 Gew.% oder von 2 bis 10 Gew.% eingesetzt. Besonders bevorzugt sind Acrylnitril, Methacrylnitril und deren Gemisch.

Die harten Acrylatmonomere (c) werden zu mindestens 1 Gew.%, vorzugsweise von 1 bis 30 Gew.% eingesetzt. Harte Acrylatmonomere (c) sind z.B. Alkylacrylate und Al-kylmethacrylate mit jeweils 1 bis 10 C-Atomen in der Alkylgruppe, sofern die Glasübergangstemperatur des jeweiligen Homopolymers mindestens 60 °C, besonders bevorzugt mindestens 80 °C beträgt. Bevorzugt sind Alkylmethacrylate mit 1 bis 4 C-Atomen in der Alkylgruppe. Harte Acrylatmonomere (c) sind z.B. Methylmethacrylat, Ethylmethacrylat, Isobutylmethacrylat oder tert-Butylmethacrylat. Besonders bevorzugt ist Methylmethacrylat.

Die ethylenisch ungesättigten Säuremonomere (d) werden zu mindestens 0,1 Gew.%, vorzugsweise von 0,1 bis 10 Gew.%, oder von 0,5 bis 8 Gew.%, oder von 1 bis 6 Gew.% eingesetzt. Monomere der Gruppe (d) sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure. Die Säuregruppen enthaltenden Monomeren der Gruppe (d) können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

Die Monomeren (e) mit mindestens zwei nicht-konjugierten, polymerisierbaren Vinylgruppen (interne Vernetzer) werden zu mindestens 0,01 Gew.%, vorzugsweise von 0,01 bis 0,5 Gew.% oder von 0,05 bis 0,1 Gew.% eingesetzt. Bevorzugte Vinylgruppen sind Acryl- bzw. Methacrylgruppen. Genannt seien z.B. Divinylbenzol, Alkandioldiacrylate, Alkandioldimethacrylate, Allylacrylate und Allylmethacrylate. Besonders bevorzugt sind Alkandioldiacrylate und Alkandioldimethacrylate mit jeweils 2 bis 8, vorzugsweise 4 bis 6 C-Atomen in der Alkandiolgruppe. Ganz besonders bevorzugt sind Allylmethacrylat, Butandioldiacrylat, Butandioldimethacrylat, Hexandioldiacrylat und Hexandioldimethacrylat oder deren Gemisch.

Das in dem erfindungsgemäßen Klebstoff enthaltende Polymer kann optional aus weiteren, von den Monomeren (a) bis (e) verschiedenen Monomeren (f) aufgebaut sein. Die weiteren Monomere (f) können in Mengen zu 0 bis 25 Gew.%, z.B. von 0,5 bis 25 Gew.% vorliegen. In einer bevorzugten Ausführungsform ist das Polymer zu mindestens 0,5 Gew.%, insbesondere zu 0,5 bis 15 Gew. % oder zu 1 bis 10 Gew.% aufgebaut aus mindestens einem Hydroxymonomeren (f1), ausgewählt aus Hydroxyalkylacrylaten und Hydroxyalkylmethacrylaten mit jeweils 1 bis 10 C-Atomen in den Alkylgruppen sowie 0 bis 15 Gew.% weiteren, von den Monomeren (a) bis (f1) verschiedenen weiteren Monomeren (f2). Bevorzugte Hydroxymonomere (f1) sind 2-Hydroxypropylacrylat und 2-Hydroxybutylacrylat. Eine besondere Ausführungsform der Erfindung enthält eine Mischung von 2-Hydroxypropylacrylat und 2-Hydroxybutylacrylat.

Weitere Monomere (f2) sind z.B. ausgewählt aus von (a) und (c) verschiedenen (Meth)acrylsäureestern wie z.B. Methylacrylat, Vinylestern von bis zu 20 C-Atome enthaltenden Carbonsäuren, Vinylaromaten mit bis zu 20 C-Atomen, Vinylhalogeniden, Vinylethern von 1 bis 10 C-Atome enthaltenden Alkoholen, Kohlenwasserstoffen mit 4 bis 8 C-Atomen und einer oder zwei konjugierten olefinischen Doppelbindungen, Acrylamid, Methacrylamid, Phenyloxyethylglykolmono(meth)acrylat, Glycidylacrylat, Glycidylmethacrylat und Amino(meth)acrylate wie 2-Aminoethyl(meth)acrylat. Vinylester von Carbonsäuren mit 1 bis 20 C-Atomen sind z.B. Vinyllaurat, -stearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und einer oder zwei konjugierten olefinischen Doppelbindungen seien Ethylen, Propylen, Butadien, Isopren und Chloropren genannt. Als weitere Monomere bevorzugt sind Vinylaromaten, insbesondere Styrol.

Das Polymer enthält vorzugsweise hydrophile Gruppen ausgewählt aus Carboxylgruppen, Hydroxylgruppen, Aminogruppen und Carbonsäureamidgruppen. Der Gehalt dieser hydrophilen Gruppen beträgt insbesondere 0,001 bis 0,5 Mol auf 100 g Polymer. Vorzugsweise ist der Gehalt mindestens 0,005 Mol besonders bevorzugt mindestens 0,008 Mol und maximal 0,2 Mol insbesondere maximal 0,1 Mol, ganz besonders bevorzugt maximal 0,05 bzw. 0,03 Mol auf 100 g/Polymer. Besonders bevorzugt sind die hydrophilen Gruppen, ausgewählt aus Carboxylgruppen, Hydroxylgruppen und Carbonsäureamidgruppen. Besonders bevorzugt handelt es sich bei mindestens 20 Mol-% der Gesamtmolmenge dieser hydrophilen Gruppen um Carboxylgruppen. Unter Carboxylgruppen werden sowohl Carbonsäuregruppen als auch deren Salze verstanden. Im Falle der Salze handelt es sich bevorzugt um Salze mit flüchtigen Basen, z.B. Ammoniak. Die hydrophilen Gruppen können durch Copolymerisation der entsprechenden Monomere an das Polymer gebunden werden. Bevorzugte Monomere mit hydrophilen Gruppen sind die oben genannten Monomere mit Carboxylgruppen und Hydroxylgruppen, insbesondere z.B. Acrylsäure.

Eine Ausführungsform der Erfindung ist dadurch gekennzeichnet, dass die weichen Acrylatmonomere (a) ausgewählt sind aus n-Butylacrylat und 2-Ethylhexylacrylat, das Monomer (b) Acrylnitril ist, das harte Acrylatmonomer (c) Methylmethacrylat ist, die Säuremonomere (d) ausgewählt sind aus Acrylsäure und Methacrylsäure und die Monomere (e) ausgewählt sind aus Alkandioldiacrylaten, Alkandioldimethacrylaten, Allylacrylaten und Allylmethacrylaten.

Eine Ausführungsform der Erfindung ist dadurch gekennzeichnet, dass die Monomere (a) in Mengen von 55 bis 90 Gew.%, die Monomeren (b) in Mengen von 1 bis 15 Gew.%, die Monomeren (c) in Mengen von 1 bis 30 Gew.%, die Monomeren (d) in Mengen von 0,1 bis 10 Gew.%, die Monomere (e) in Mengen von 0,05 bis 0,5 Gew.% und die Monomere (f) in Mengen von 0,5 bis 25 Gew.% vorliegen.

Eine bevorzugte Ausführungsform der Erfindung ist dadurch gekennzeichnet, dass das Polymer aufgebaut ist aus
(a) 55 bis 90 Gew. % mindestens eines weichen Acrylatmonomers, ausgewählt aus n-Butylacrylat und 2-Ethylhexylacrylat,
(b) 2 bis 10 Gew.% Acrylnitril,
(c) 1 bis 30 Gew.% Methylmethacrylat, wobei 1 bis 15 Gew.%, bezogen auf die Gesamtmenge aller Monomere, in einer zweiten Polymerisationsstufe polymerisiert werden,
(d) 0,2 bis 5 Gew.% mindestens eines Säuremonomers, ausgewählt aus Acrylsäure und Methacrylsäure,
(e) 0,05 bis 0,5 Gew.% mindestens eines Monomeren mit mindestens zwei nicht-konjugierten, polymerisierbaren Vinylgruppen,
(f1) 0,5 bis 10 Gew.% mindestens eines Hydroxymonomeren, ausgewählt aus Hydroxyalkylacrylaten und Hydroxyalkylmethacrylaten mit jeweils 1 bis 10 C-Atomen in den Alkylgruppen, und
(f2) 0 bis 15 Gew.% weiteren, von den Monomeren (a) bis (f1) verschiedenen Monomeren.

Vorzugsweise ist das in dem erfindungsgemäßen Klebstoff enthaltene Polymer frei von Vinylacetat und der Klebstoff enthält außer den internen Vernetzern (e) keine weiteren Vernetzer, insbesondere keine externen Vernetzer.

Die Herstellung der Polymere erfolgt in einer bevorzugten Ausführungsform durch E-mulsionspolymerisation, es handelt sich daher um ein Emulsionspolymerisat. Bei der Emulsionspolymerisation werden ionische und/oder nicht-ionische Emulgatoren und/oder Schutzkolloide bzw. Stabilisatoren als grenzflächenaktive Verbindungen verwendet. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Trialkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel I 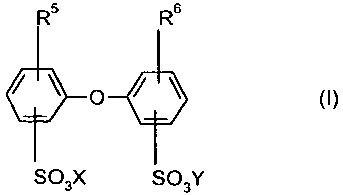 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®}2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z.B. Dowfax^{®}2 A1, Emulan^{®} NP 50, Dextrol^{®}OC 50, Emulgator 825, Emulgator 825 S, Emulan^{®}OG, Texapon^{®} NSO, Nekanil^{®} 904 S, Lumiten^{®} I-RA, Lumiten^{®} E 3065, Disponil^{®} FES 77, Lutensol^{®} AT 18, Steinapol^{®} VSL, Emulphor^{®} NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid. Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-InitiatorSysteme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die Molmasse verringert wird. Geeignet sind z.B. Verbindungen mit einer Thiolgruppe wie tert.-Butylmercaptan, Thioglycolsäureester, z.B. 2-Ethylhexylthioglycolat, Mercaptoethynol, Mercaptopropyltrimethoxysilan, n-Dodecylmercaptan oder tert.-Dodecylmercaptan. Geeignete Regler sind auch C6- bis C20-Kohlenwasserstoffe, welche bei Wasserstoffabstraktion ein Pentadienylradikal bilden, z.B. Terpinolen.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet.

Die Polymerisation erfolgt durch Stufenpolymerisation, wobei mindestens ein Teil der weichen Acrylatmonomere (a) in einer ersten Polymerisationsstufe polymerisiert werden und mindestens ein Teil der harten Acrylatmonomere (c) in einer zweiten oder späteren Polymerisationsstufe polymerisiert werden. Vorzugsweise werden mindestens 50 Gew.%, d.h. 50-100 Gew.%, insbesondere 100 Gew.% der Gesamtmenge der weichen Acrylatmonomere (a) in der ersten Stufe polymerisiert und mindestens 10 Gew.%, vorzugsweise 15-60 Gew.% oder 20 bis 50 Gew.% der Gesamtmenge der harten Acrylatmonomere (c) in der zweiten oder späteren Stufe.

Im Übrigen können die einzelnen Stufen der Emulsionspolymerisation als Batchprozess oder auch in Form eines Zulaufverfahrens, einschließlich Gradientenfahrweise, durchgeführt werden. Bevorzugt für die erste Stufe ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes der ersten Stufe, üblicherweise über mehrere räumlich getrennte Zuläufe, von denen einer oder mehrere die Monomeren in reiner oder in emulgierter Form enthalten, kontinuierlich oder unter Überlagerung eines Konzentrationsgefälles unter Aufrechterhaltung der Polymerisation der Polymerisationszone zuführt.

Bei der Polymerisation kann auch z.B. zur besseren Einstellung der Teilchengröße eine Polymersaat vorgelegt werden. Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung. Das so hergestellte Polymer wird vorzugsweise in Form seiner wässrigen Dispersion verwendet.

Die mittlere Teilchengröße der in der wässrigen Dispersion dispergierten Polymerteilchen ist vorzugsweise kleiner 300 nm, insbesondere kleiner 200 nm. Besonders bevorzugt liegt die mittlere Teilchengröße zwischen 140 und 200 nm. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden.

Der pH-Wert der Polymerdispersion wird vorzugsweise auf pH größer 4,5, insbesondere auf einen pH-Wert zwischen 5 und 8 eingestellt.

Die Glasübergangstemperatur des Polymeren, bzw. des Polymeren beträgt vorzugsweise -60 bis 0°C, besonders bevorzugt -60 bis -10°C und ganz besonders bevorzugt -60 bis -20°C. Die Glasübergangstemperatur lässt sich bestimmen durch Differential Scanning Calorimetrie (ASTM D 3418-08, sog. "midpoint temperature").

Bei den erfindungsgemäßen Klebstoffen handelt es sich vorzugsweise um Haftklebstoffe. Diese können allein aus dem Polymeren bzw. der wässrigen Dispersion des Polymeren bestehen.

Der Klebstoff benötigt keine externen Vernetzer. Ein Gehalt an externen Vernetzern ist daher im Allgemeinen kleiner als 0,5 Gew.-Teile auf 100 Gew.-Teile Polymer und insbesondere kleiner 0,1 Gew.-Teile. Besonders bevorzugt wird auf externe Vernetzer ganz verzichtet.

Die Klebstoffe und Haftklebstoffe können weitere Zusatzstoffe enthalten Füllstoffe, Farbstoffe, Verlaufsmittel, Verdicker oder Tackifier (klebrigmachende Harze), Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung als Tackifier. Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten. Die Gewichtsmenge der Tackifier beträgt vorzugsweise 5 bis 100 Gew.-Teile, besonders bevorzugt 10 bis 50 Gew.-Teile, bezogen auf 100 Gew.-Teile Polymer (fest/fest).

Insbesondere eignet sich der Klebstoff bzw. Haftklebstoff zum Verbinden von Substraten, dadurch gekennzeichnet, dass zumindest eine der zu verbindenden Substratoberflächen aus Weich-PVC ist. Zum Beispiel kann der Klebstoff auf einen Träger, z.B. aus Papier oder Kunststoff aufgetragen werden und der so beschichtete Träger (z.B. ein Etikett, Klebeband oder Folie) kann auf ein Substrat aus Weich-PVC geklebt werden. Insbesondere eignen sich die erfindungsgemäßen Klebstoffe bzw. Haftklebstoffe zur Herstellung von selbstklebenden Artikeln, wie Etiketten, Klebebändern oder Klebefolien, z.B. Schutzfolien. Die selbstklebenden Artikel bestehen im Allgemeinen aus einem Träger und einer ein- oder beidseitig, vorzugsweise einseitig aufgebrachten Schicht des Klebstoffs. Bei dem Trägermaterial kann es sich z.B. um Papier, vorzugsweise um Kunststofffolien aus Polyolefinen oder PVC handeln, besonders bevorzugt ist PVC, ganz besonders bevorzugt Weich-PVC. Unter Weich-PVC versteht man Polyvinylchlorid, welches einen Gehalt an Weichmachern hat und eine erniedrigte Erweichungstemperatur aufweist. Übliche Weichmacher sind z.B. Phthalate, Epoxide, Adipinsäureester. Der Gehalt der Weichmacher im Weich-PVC beträgt i.a. mehr als 10, insbesondere mehr als 20 Gew.-%.

Bei Weich PVC können Weichmacher in die Klebstoffschicht migrieren und die Klebstoffeigenschaften deutlich verschlechtern. Mit dem erfindungsgemäßen Klebstoff wirkt sich eine Migration der Weichmacher nicht oder kaum auf die Eigenschaften des Klebstoffs aus. Weiterhin ist vor allem bei Weich-PVC ein Schrumpfen der Substrate durch den erfindungsgemäßen Klebstoff vermieden oder verringert.

Gegenstand der vorliegenden Erfindung sind daher auch selbstklebende Artikel mit Weich-PVC als Trägermaterial, insbesondere in Form einer PVC-Folie, und einer zumindest teilweise darauf beschichteten Klebstoffschicht aus dem erfindungsgemäßen Klebstoff, wobei die PVC-Folie einen Weichmachergehalt von vorzugsweise mindestens 20 Gew.% aufweist.

Zur Herstellung der Klebstoffschicht auf dem Trägermaterial kann das Trägermaterial in üblicher Weise beschichtet werden. Die erhaltenen, beschichteten Substrate werden z.B. als Selbstklebeartikel, wie Etiketten, Klebebänder oder Folien verwendet. Die selbstklebenden Artikel mit Weich-PVC als Trägermaterial eignen sich insbesondere für Außenanwendungen. Insbesondere können bedruckte selbstklebende Folien im Außenbereich verwendet und z. B. auf Reklametafeln oder Fahrzeuge aller Art geklebt werden.

Die erfindungsgemäßen selbstklebenden Artikel haben gute anwendungstechnische Eigenschaften, insbesondere eine gute Schälfestigkeit (Adhäsion) und Scherfestigkeit (Kohäsion). Die Eigenschaften bleiben auch bei Weich-PVC als Trägermaterial und auch nach längerer Wärmelagerung gut. Eine Trübung der Klebstoffschicht durch Einwirkung von Feuchtigkeit (Weißanlaufen) ist nicht oder kaum zu beobachten. Die Klebstoffschicht hat daher eine hohe Wasserbeständigkeit. Ein Schrumpfen der selbstklebenden Artikel ist kaum zu beobachten, auch nicht, wenn die Artikel hohen Temperaturen, z.B. mehr als 50°C, ausgesetzt sind.

### Beispiele

Die Zusammensetzungen der erfindungsgemäßen Copolymere B1 und B2 sowie der Vergleichspolymere V1, V2 und V3 sind in Tabelle 1 zusammengefasst. Das Vergleichspolymer V1 entspricht einem Beispiel der WO 2005/100502. Vergleichsbeispiel V2 enthält Vernetzer aber kein Acrylnitril. Vergleichsbeispiel V3 enthält Acrylnitril, aber keinen Vernetzer.

Die Polymere B1 und B2 wurden durch Stufenpolymerisation (Quellungspolymerisation) hergestellt, indem 8 Gew.-Teile (bezogen auf 100 Gew.-Teile aller Monomere) Methylmethacrylat zusammen mit den übrigen Monomeren in einer ersten Polymerisationsstufe copolymerisiert wurden und anschließend 4 Gew.-Teile Methylmethacrylat in einer zweiten Polymerisationsstufe nachpolymerisiert wurden.

**Tabelle 1: Mengenangaben in Gew.-Teilen pro 100 Gew.-Teile aller Monomere**

| | B1 | B2 | V1 | V2 | V3 |
|---|---|---|---|---|---|
| EHA | 67,49 | 69,39 | 58,7 | 72,49 | 67,54 |
| Ethylacrylat | | | 27 | | |
| Methylmethacrylat | 8 (1.Stufe) | 8 (1.Stufe) | | 8 (1.Stufe) | 8 (1.Stufe) |
| | 4 (2. Stufe | 4 (2. Stufe | | 4 (2. Stufe | 4 (2. Stufe |
| Methylacrylat | 7,9 | 7,9 | | 7,9 | 7,9 |
| Acrylnitril | 5 | 5 | | | 5 |
| HPA | 2,16 | 2,16 | | 2,16 | 2,16 |
| HBA | 1,9 | | | 1,9 | 1,9 |
| Styrol | 2 | 2 | 5 | 2 | 2 |
| Vinylacetat | | | 5 | | |
| Acrylsäure | 1,5 | 1,5 | 3 | 1,5 | 1,5 |
| Allylmethacrylat | 0,05 | 0,05 | | 0,05 | |
| Butandioldiacrylat | | | 1,3 | | |

| | | | | | |
|---|---|---|---|---|---|
| HBA: 2-Hydroxybutylacrylat HPA: 2-Hydroxypropylacrylat EHA: 2-Ethylhexylacrylat | | | | | |

Es wurden wässrige Polymerdispersionen erhalten. Aus den wässrigen Polymerdispersionen wurden durch Verdicken mit NH₃ Haftklebstoffzusammensetzungen hergestellt und auf ihre Eigenschaften getestet.

### Schälfestigkeit nach Wärmelagerung

Die Haftklebstoffzusammensetzungen wurden mit einer Auftragsmenge von 20 g/m² (für alle Eigenschaften außer Weißanlaufen, wo die Auftragsmenge 25 g/m² betrug) auf Weich-PVC-Folie, erhältlich von Renolit, beschichtet und 3 Minuten bei 90 °C getrocknet. Anschließend wurde die Schälfestigkeit (Adhäsion) bestimmt. Der beschichtete Träger wurde in 25 mm breite Prüfstreifen geschnitten. Bei der Bestimmung der Schälfestigkeit (Adhäsion) wurde jeweils ein 2,5 cm breiter Prüfstreifen auf einen Prüfkörper aus Stahl geklebt und mit einer 1 kg schweren Rolle einmal angerollt. Er wurde nach 20 Minuten mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit ist die Kraft in N/2,5 cm, die sich als Durchschnittswert aus fünf Messungen ergibt. Die Prüfung erfolgte im Normklima (50% rel. Luftfeuchtigkeit, 1 bar, 23 °C). Die Prüfung der Schälfestigkeit wurde nach einer Wärmelagerung durchgeführt. Die Wärmelagerung der Prüfverbunde (3 Tage, 70 °C) simuliert ein beschleunigtes Altern der Proben und somit eine forcierte Migration des Weichmachers aus dem PVC-Träger in die Klebeschicht. Die Ergebnisse sind in Tabelle 2 aufgeführt.

### Weißanlaufen (Wasserbeständigkeit)

Die Prüfstreifen wurden bei Raumtemperatur (ca. 23°C) in ein Wasserbad gehängt. Die Trübung des Klebstofffilms wurde über die Zeit beobachtet. Es wurde der Zeitpunkt bestimmt, an dem eine deutliche Trübung erkennbar wurde. Je länger der Zeitraum, umso besser ist die Wasserbeständigkeit. Die Ergebnisse sind in Tabelle 2 aufgeführt.

**Tabelle 2**

| | Schälfestigkeit nach Wärmelagerung (N/25 mm) | Weißanlaufen |
|---|---|---|
| B1 | 11 | 4h |
| B2 | 12,1 | 2h |
| V1 | 0,6 | 2h |
| V2 | 0,3 | 2h |
| V3 | 0,4 | 2h |

## Patentansprüche

1. Klebstoff, enthaltend ein durch radikalische Polymerisation von ethylenisch ungesättigten Verbindungen erhältliches Polymer, welches aufgebaut ist aus
(a) mindestens 50 Gew. % mindestens eines weichen Acrylatmonomers, ausgewählt aus Alkylacrylaten, welche, wenn sie als Homopolymer polymerisiert sind, eine Glasübergangstemperatur von kleiner 0 °C aufweisen,
(b) mindestens 1 Gew.% mindestens eines ethylenisch ungesättigten Nitrils,
(c) mindestens 1 Gew.% mindestens eines harten Acrylatmonomers, ausgewählt aus Alkylacrylaten und Alkylmethacrylaten, welche jeweils, wenn sie als Homopolymer polymerisiert sind, eine Glasübergangstemperatur von mindestens 60 °C aufweisen,
(d) mindestens 0,1 Gew.% mindestens eines ethylenisch ungesättigten Säuremonomers,
(e) mindestens 0,01 Gew.% mindestens eines Monomeren mit mindestens zwei nicht-konjugierten, polymerisierbaren Vinylgruppen, und
(f) optional aus weiteren, von den Monomeren (a)-(e) verschiedenen Monomeren, wobei die Polymerisation durch Stufenpolymerisation erfolgt, wobei mindestens ein Teil der weichen Acrylatmonomere (a) in einer ersten Polymerisationsstufe polymerisiert werden und mindestens ein Teil der harten Acrylatmonomere (c) in einer zweiten oder späteren Polymerisationsstufe polymerisiert werden.

2. Klebstoff gemäß Anspruch 1, **dadurch gekennzeichnet, dass** die weichen Acrylatmonomere (a) ausgewählt sind aus n-Butylacrylat und 2-Ethylhexylacrylat, das Monomer (b) Acrylnitril ist, das harte Acrylatmonomer (c) Methylmethacrylat ist, die Säuremonomere (d) ausgewählt sind aus Acrylsäure und Methacrylsäure und die Monomere (e) ausgewählt sind aus Alkandioldiacrylaten, Alkandioldimethacrylaten, Allylacrylaten und Allylmethacrylaten.

3. Klebstoff nach einem der vorhergehenden Ansprüche, **dadurch gekennzeichnet, dass** die Monomere (a) in Mengen von 55 bis 90 Gew.%, die Monomeren (b) in Mengen von 1 bis 15 Gew.%, die Monomeren (c) in Mengen von 1 bis 30 Gew.%, die Monomeren (d) in Mengen von 0,1 bis 10 Gew.%, die Monomere (e) in Mengen von 0,05 bis 0,5 Gew.% und die Monomere (f) in Mengen von 0,5 bis 25 Gew.% vorliegen.

4. Klebstoff nach einem der vorhergehenden Ansprüche, **dadurch gekennzeichnet, dass** das Polymer zu 0,5 bis 15 Gew. % aus Hydroxymonomeren aufgebaut ist, ausgewählt aus Hydroxyalkylacrylaten und Hydroxyalkylmethacrylaten mit jeweils 1 bis 10 C-Atomen in den Alkylgruppen.

5. Klebstoff nach einem der vorhergehenden Ansprüche, **dadurch gekennzeichnet, dass** das Polymer aufgebaut ist aus
(a) 55 bis 90 Gew. % mindestens eines weichen Acrylatmonomers, ausgewählt aus n-Butylacrylat und 2-Ethylhexylacrylat,
(b) 2 bis 10 Gew.% Acrylnitril,
(c) 1 bis 30 Gew.% Methylmethacrylat, wobei 1 bis 15 Gew.%, bezogen auf die Gesamtmenge aller Monomere, in einer zweiten Polymerisationsstufe polymerisiert werden,
(d) 0,2 bis 5 Gew.% mindestens eines Säuremonomers, ausgewählt aus Acrylsäure und Methacrylsäure,
(e) 0,05 bis 0,5 Gew.% mindestens eines Monomeren mit mindestens zwei nicht-konjugierten, polymerisierbaren Vinylgruppen,
(f1) 0,5 bis 10 Gew.% mindestens eines Hydroxymonomeren, ausgewählt aus Hydroxyalkylacrylaten und Hydroxyalkylmethacrylaten mit jeweils 1 bis 10 C-Atomen in den Alkylgruppen, und
(f2) 0 bis 15 Gew.% weiteren, von den Monomeren (a) bis (f1) verschiedenen Monomeren.

6. Klebstoff nach einem der vorhergehenden Ansprüche, **dadurch gekennzeichnet, dass** das Polymer frei ist von Vinylacetat und im Übrigen keine weiteren Vernetzer enthält.

7. Klebstoff nach einem der vorhergehenden Ansprüche, **dadurch gekennzeichnet, dass** die Stufenpolymerisation derart erfolgt, dass 50-100 Gew.% der Gesamtmenge der weichen Acrylatmonomere (a) in der ersten Stufe polymerisiert werden und mindestens 10 Gew.% der Gesamtmenge der harten Acrylatmonomere (c) in der zweiten oder späteren Stufe polymerisiert werden.

8. Klebstoff nach einem der vorhergehenden Ansprüche, **dadurch gekennzeichnet, dass** es sich bei dem Polymer um ein Emulsionspolymerisat handelt.

9. Klebstoff gemäß einem der vorhergehenden Ansprüche, **dadurch gekennzeichnet, dass** es sich um einen Haftklebstoff handelt.

10. Verwendung des Klebstoffs gemäß einem der vorhergehenden Ansprüche zum Verbinden von zwei Substraten, von denen mindestens eins aus Weich-PVC ist.

11. Verwendung gemäß dem vorhergehenden Anspruch, **dadurch gekennzeichnet, dass** der Klebstoff ein Haftklebstoff ist und auf Trägermaterial aus Weich-PVC aufgebracht wird.

12. Selbstklebende Artikel, welche als Trägermaterial eine PVC-Folie mit einem Weichmachergehalt von mindestens 20 Gew.% aufweisen, wobei die PVC-Folie zumindest teilweise mit einem Klebstoff gemäß einem der Ansprüchen 1 - 9 beschichtet ist.

## Claims

1. An adhesive, comprising a polymer which is obtainable via free-radical polymerization of ethylenically unsaturated compounds and which is composed of
(a) at least 50% by weight of at least one soft acrylate monomer selected from alkyl acrylates which when polymerized in the form of homopolymer have a glass transition temperature below 0°C,
(b) at least 1% by weight of at least one ethylenically unsaturated nitrile,
(c) at least 1% by weight of at least one hard acrylate monomer selected from alkyl acrylates and alkyl methacrylates which, respectively, when polymerized in the form of homopolymer have a glass transition temperature of at least 60°C,
(d) at least 0.1% by weight of at least one ethylenically unsaturated acid monomer,
(e) at least 0.01% by weight of at least one monomer having at least two non-conjugated, polymerizable vinyl groups, and
(f) optionally other monomers different from the monomers (a)-(e),
where the polymerization reaction takes place via staged polymerization, where at least one portion of the soft acrylate monomers (a) is polymerized in a first polymerization stage and at least one portion of the hard acrylate monomers (c) is polymerized in a second or subsequent polymerization stage.

2. The adhesive according to claim 1, wherein the soft acrylate monomers (a) have been selected from n-butyl acrylate and 2-ethylhexyl acrylate, the monomer (b) is acrylonitrile, the hard acrylate monomer (c) is methyl methacrylate, the acid monomers (d) have been selected from acrylic acid and methacrylic acid, and the monomers (e) have been selected from alkanediol diacrylates, alkanediol dimethacrylates, allyl acrylates and allyl methacrylates.

3. The adhesive according to either of the preceding claims, wherein the amounts present of the monomers (a) are from 55 to 90% by weight, the amounts present of the monomers (b) are from 1 to 15% by weight, the amounts present of the monomers (c) are from 1 to 30% by weight, the amounts present of the monomers (d) are from 0.1 to 10% by weight, the amounts present of the monomers (e) are from 0.05 to 0.5% by weight, and the amounts present of the monomers (f) are from 0.5 to 25% by weight.

4. The adhesive according to any of the preceding claims, wherein the polymer is composed of from 0.5 to 15% by weight of hydroxymonomers selected from hydroxyalkyl acrylates and hydroxyalkyl methacrylates having respectively from 1 to 10 carbon atoms in the alkyl groups.

5. The adhesive according to any of the preceding claims, wherein the polymer is composed of
(a) from 55 to 90% by weight of at least one soft acrylate monomer selected from n-butyl acrylate and 2-ethylhexyl acrylate,
(b) from 2 to 10% by weight of acrylonitrile,
(c) from 1 to 30% by weight of methyl methacrylate, where from 1 to 15% by weight, based on the total amount of all of the monomers, are polymerized in a second polymerization stage,
(d) from 0.2 to 5% by weight of at least one acid monomer selected from acrylic acid and methacrylic acid.
(e) from 0.05 to 0.5% by weight of at least one monomer having at least two non-conjugated, polymerizable vinyl groups,
(f1) from 0.5 to 10% by weight of at least one hydroxymonomer selected from hydroxyalkyl acrylates and hydroxyalkyl methacrylates having respectively from 1 to 10 carbon atoms in the alkyl groups, and
(f2) from 0 to 15% by weight of other monomers different from the monomers (a) to (f1).

6. The adhesive according to any of the preceding claims, wherein the polymer is free from vinyl acetate and also comprises no further crosslinking agents.

7. The adhesive according to any of the preceding claims, wherein the method used for the staged polymerization reaction is that 50-100% by weight of the total amount of the soft acrylate monomers (a) are polymerized in the first stage, and at least 10% by weight of the total amount of the hard acrylate monomers (c) are polymerized in the second or subsequent stage.

8. The adhesive according to any of the preceding claims, wherein the polymer is an emulsion polymer.

9. The adhesive according to any of the preceding claims, which is a pressure-sensitive adhesive.

10. The use of the adhesive according to any of the preceding claims for the bonding of two substrates, of which at least one is made of flexible PVC.

11. The use according to the preceding claim, wherein the adhesive is a pressure-sensitive adhesive and is applied to substrate material made of flexible PVC.

12. A self-adhesive item which comprises, as substrate material, a PVC foil with plasticizer content of at least 20% by weight, where the PVC foil has been coated at least to some extent with an adhesive according to any of claims 1 to 9.

## Revendications

1. Adhésif, contenant un polymère pouvant être obtenu par polymérisation radicalaire de composés à insaturation éthylénique, qui est constitué de
(a) au moins 50 % en poids d'au moins un monomère acrylate souple, choisi parmi des acrylates d'alkyle qui, lorsqu'ils sont polymérisés en homopolymère, présentent une température de transition vitreuse inférieure à 0 °C,
(b) au moins 1 % en poids d'au moins un nitrile à insaturation éthylénique,
(c) au moins 1 % en poids d'au moins un monomère acrylate rigide, choisi parmi des acrylates d'alkyle et méthacrylates d'alkyle, qui, lorsqu'ils sont polymérisés en homopolymère, présentent une température de transition vitreuse d'au moins 60 °C,
(d) au moins 0,1 % en poids d'au moins un monomère acide à insaturation éthylénique,
(e) au moins 0,01 % en poids d'au moins un monomère comportant au moins deux groupes vinyle polymérisables, non conjugués, et
(f) en option d'autres monomères différents des monomères (a)-(e),
la polymérisation s'effectuant par polymérisation par stades, au moins une partie des monomères acrylate souples (a) étant polymérisés dans un premier stade de polymérisation et au moins une partie des monomères acrylate rigides (c) étant polymérisés dans un deuxième stade ou des stades ultérieurs de polymérisation.

2. Adhésif selon la revendication 1, **caractérisé en ce que** les monomères acrylate souples (a) sont choisis parmi l'acrylate de n-butyle et l'acrylate de 2-éthylhexyle, le monomère (b) est l'acrylonitrile, le monomère acrylate rigide (c) est le méthacrylate de méthyle, les monomères acides (d) sont choisis parmi l'acide acrylique et l'acide méthacrylique et les monomères (e) sont choisis parmi des diacrylates d'alcanediol, des diméthacrylates d'alcanediol, des acrylates d'allyle et des méthacrylates d'allyle.

3. Adhésif selon l'une quelconque des revendications précédentes, **caractérisé en ce que** les monomères (a) sont présents en des quantités de 55 à 90 % en poids, les monomères (b) sont présents en des quantités de 1 à 15 % en poids, les monomères (c) sont présents en des quantités de 1 à 30 % en poids, les monomères (d) sont présents en des quantités de 0,1 à 10 % en poids, les monomères (e) sont présents en des quantités de 0,05 à 0,5 % en poids et les monomères (f) sont présents en des quantités de 0,5 à 25 % en poids.

4. Adhésif selon l'une quelconque des revendications précédentes, **caractérisé en ce que** le polymère est constitué à raison de 0,5 à 15 % en poids de monomères hydroxylés, choisis parmi des acrylates d'hydroxyalkyle et des méthacrylates d'hydroxyalkyle ayant chacun de 1 à 10 atomes de carbone dans les groupes alkyle.

5. Adhésif selon l'une quelconque des revendications précédentes, **caractérisé en ce que** le polymère est constitué de
(a) 55 à 90 % en poids d'au moins un monomère acrylate souple, choisi parmi l'acrylate de n-butyle et l'acrylate de 2-éthylhexyle,
(b) 2 à 10 % en poids d'acrylonitrile,
(c) 1 à 30 % en poids de méthacrylate de méthyle, 1 à 15 % en poids, par rapport à la quantité totale de tous les monomères, étant polymérisés dans un deuxième stade de polymérisation,
(d) 0,2 à 5 % en poids d'au moins un monomère acide, choisi parmi l'acide acrylique et l'acide méthacrylique,
(e) 0,05 à 0,5 % en poids d'au moins un monomère comportant au moins deux groupes vinyle polymérisables, non conjugués,
(f1) 0,5 à 10 % en poids d'au moins un monomère hydroxylé, choisi parmi des acrylates d'hydroxyalkyle et des méthacrylates d'hydroxyalkyle comportant chacun de 1 à 10 atomes de carbone dans les groupes alkyle, et
(f2) 0 à 15 % en poids d'autres monomères différents des monomères (a) à (f1).

6. Adhésif selon l'une quelconque des revendications précédentes, **caractérisé en ce que** le polymère est exempt d' acétate de vinyle et en outre ne contient pas d'autres agents de réticulation.

7. Adhésif selon l'une quelconque des revendications précédentes, **caractérisé en ce que** la polymérisation par stades s'effectue de telle sorte que 50-100 % en poids de la quantité totale des monomères acrylate souples (a) sont polymérisés dans le premier stade et au moins 10 % en poids de la quantité totale des monomères acrylate rigides (c) sont polymérisés dans le deuxième stade ou les stades ultérieurs.

8. Adhésif selon l'une quelconque des revendications précédentes, **caractérisé en ce que** le polymère consiste en un produit de polymérisation en émulsion.

9. Adhésif selon l'une quelconque des revendications précédentes, **caractérisé en ce qu'**il consiste en un adhésif sensible à la pression.

10. Utilisation de l'adhésif selon l'une quelconque des revendications précédentes pour l'assemblage de deux supports, dont au moins un est à base de PVC souple.

11. Utilisation selon la revendication précédente, **caractérisée en ce que** l'adhésif est un adhésif sensible à la pression et est appliqué sur un matériau de support à base de PVC souple.

12. Article autocollant, qui comporte en tant que matériau de support un film en PVC ayant une teneur en plastifiant d'au moins 20 % en poids, le film en PVC étant au moins en partie revêtu avec un adhésif selon l'une quelconque des revendications 1 - 9.
